# EUROPEAN PATENT APPLICATION

(11) **EP 1 471 128 A1**
(43) Date of publication of application: **27.10.2004**
(21) Application number: 04009890.7
(22) Date of filing: 26.04.2004
(51) Int. Cl.: C09K 11/79, G21K 4/00

(54) **Stimulable cerium activated lutetium silicate phosphor**

(30) Priority: 24.04.2003 JP 2003120377
(71) Applicant: Fuji Photo Film Co., Ltd., Kanagawa 250-0123 (JP)
(72) Inventor: Misawa, Hirokazu, Ashigara-kami-gun, Kanagawa-ken 258-8538 (JP); Takahashi, Kenji, Ashigara-kami-gun, Kanagawa-ken 258-8538 (JP)
(74) Representative: Klunker . Schmitt-Nilson . Hirsch

(57) **Abstract**

In a radiation image storage panel having a stimulable phosphor layer which contains a stimulable powdery phosphor and a binder, it is advantageous to employ a stimulable powdery cerium activated lutetium silicate phosphor represented by the following formula (I):

Lu_{w}YₓGd_{y}La_{z}SiOₚ:aCe (I)

in which w, x, y and z are numbers satisfying the conditions of 1.5≤w+x+y+z≤2.2, 0≤x, 0≤y, 0≤z and w/(w+x+y+z)> 0.8; p is a number to neutralize the compound; and a is a number satisfying the condition of 2 x 10⁻⁵<a<2 x 10⁻².

## Description

### FIELD OF THE INVENTION

The present invention relates to a stimulable cerium activated lutetium silicate phosphor, a radiation image storage panel, and a radiation image recording and reproducing method.

### BACKGROUND OF THE INVENTION

When a stimulable phosphor (i.e., an energy-storing phosphor) is exposed to radiation such as X-rays, it absorbs and stores a portion of energy of the radiation. The phosphor then emits a light according to the level of the stored energy when exposed to, for example, electromagnetic wave such as visible or infrared light (i.e., stimulating light).

A radiation image recording and reproducing method utilizing the stimulable phosphor (which gives stimulated emission by stimulating light or heating) has been widely employed in practice. The method employs a radiation image storage panel (which is in the form of a sheet) comprising the stimulable phosphor, and usually comprises the steps of causing the stimulable phosphor of the storage panel to absorb and store energy of the radiation having passed through an object or having radiated from an object; sequentially exciting the phosphor with a stimulating light (e.g., laser beam) to give a stimulated emission; and photoelectrically detecting the emission to obtain electric signals giving a visible radiation image. The storage panel thus treated is subjected to a step for erasing the radiation energy remaining therein, and then stored for the use in the next recording and reproducing procedure. Thus, the radiation image storage panel can be repeatedly used.

The radiation image storage panel (often referred to as stimulable phosphor sheet) has a basic structure comprising a support and an stimulable phosphor layer provided thereon. However, if the phosphor layer is self-supporting, the support may be omitted. Further, a protective film is normally provided on the free surface (surface not facing the support) of the phosphor layer to keep the phosphor layer from chemical deterioration or physical damage.

The phosphor layer usually comprises a binder and an stimulable phosphor (i.e., energy-storing phosphor) dispersed therein. There is known, however, a phosphor layer comprising agglomerate of an energy-storing phosphor without binder. The phosphor layer containing no binder can be formed by a vapor phase deposition method or by a firing method.

Japanese Patent Provisional Publication No. 2001-255610 discloses a variation of the radiation image recording and reproducing method. While a stimulable phosphor of the storage panel used in the ordinary method plays both roles of radiation-absorbing function and energy-storing function, those two functions are separated in the disclosed method. In the method, a radiation image storage panel comprising an energy-storing phosphor (i.e., stimulable phosphor) is used in combination with a phosphor screen comprising another phosphor which absorbs radiation and emits a ultraviolet or visible light. The disclosed method comprises the steps of causing the radiation-absorbing phosphor of the screen to absorb and convert radiation having passed through an object or having radiated from an object into a ultraviolet or visible light; causing the energy-storing phosphor of the storage panel to store the energy of the converted light as radiation image information; sequentially exciting the energy-storing phosphor with a stimulating light to give a stimulated emission; and photoelectrically detecting the emission to obtain electric signals giving a visible radiation image.

In any type of the radiation image recording and reproducing methods, it is desired that radiation image storage panels have as high sensitivity as possible and give reproduced radiation images of high quality (in regard to sharpness and graininess).

Japanese Patent Provisional Publication No. 2-300696 discloses a rare earth orthosilicate stimulable phosphor represented by the formula: YₓLu_{y}Gd_{z}SiO₅:aA,bB in which x, y and z are numbers satisfying the conditions of x+y+z=2, 0<x, 0≤y, 0≤z; A is Ce and/or Tb; B is Zr and/or Sm; and a and b are numbers satisfying the conditions of 2x10⁻⁵<a <0.02 and 2x10⁻⁵ <b<0.02, respectively. This publication also discloses a radiation image storage panel and a radiation image recording and reproducing method employing this phosphor.

Japanese Patent No. 3,290,497 discloses a stimulable phosphor represented by the formula: Y₂₋ₓLnₓSiO₅•yM: zAc in which Ln is at least one rare earth element selected from the group consisting of Y, Gd and Lu; Ac is at least one element selected from the group consisting of Eu, Ce, Sm and Zr; M is at least one element selected from the group consisting of Al and Mg; and x, y and z are numbers satisfying the conditions of 0<x≤2, 0<y≤1.0 and 0<z≤0.1, respectively. The patent also discloses a solid phase reaction process for preparation of this phosphor. In the publication, however, only a co-activated phosphor of YLuSiO₅·yM:z(Ce,Zr), which contains yttrium and lutetium in the molar ratio of 1:1, is concretely described.

IEEE Transaction on Nuclear Science, vol. 41(1994), No. 4, pp. 689-693 reports photostimulated luminescence of LSO (Lu₂SiO₅: Ce) .

### SUMMARY OF THE INVENTION

It is an object of the present invention to provide a new powdery stimulable phosphor (i.e., energy-storing phosphor), a radiation image storage panel and a radiation image recording and reproducing method which give a radiation image of high quality with high sensitively. The invention particularly has an object to provide a radiation image storage panel comprising an energy-storing phosphor layer (i.e., stimulable phosphor layer) which efficiently absorbs radiation and which gives off strong emission.

The present inventors have studied energy-storing phosphors used in radiation image storage panels, and finally found that a powdery cerium activated lutetium silicate phosphor, which gives stimulated emission after primary excitation of radiation such as X rays, can be obtained by firing starting materials of the phosphor at a high temperature in the absence of a flux.

The present invention resides in a stimulable powdery cerium activated lutetium silicate phosphor represented by the following formula (I):

Lu_{w}YₓGd_{y}La_{z}SiOₚ:aCe (I)

in which w, x, y and z are numbers satisfying the conditions of 1.5≤w+x+y+z≤2.2, 0≤x, 0≤y, 0≤z and w/(w+x+y+z)> 0.8; p is a number to neutralize the compound; and a is a number satisfying the condition of 2 x 10⁻⁵ <a<2 x 10⁻².

The above-mentioned stimulable powdery cerium activated lutetium silicate phosphor of the invention can be prepared by a process comprising the steps of:
mixing a lutetium compound, a silicon compound, a cerium compound, and, if required, a yttrium compound, a gadolinium compound, and a lanthanum compound in a ratio of amounts corresponding to the formula (I) to give a mixture;
firing the resulting mixture at a temperature in the range of 1,500 to 2,000°C to give a fired product; and
disintegrating the fired product to give the powdery phosphor.

The invention further resides in a radiation image storage panel having a stimulable phosphor layer comprising a stimulable powdery phosphor and a binder, in which the stimulable powdery phosphor is a stimulable powdery cerium activated lutetium silicate phosphor represented by the above-mentioned formula (I).

In the invention, a most preferred stimulable powdery cerium activated lutetium silicate phosphor is represented by the following formula (II):

Lu₂SiO₅:aCe (II)

in which a is a number satisfying the condition of 2 x 10⁻⁵ <a<2 x 10⁻².

### BRIEF DESCRIPTION OF DRAWINGS

Fig. 1 is a sectional view schematically illustrating an radiation image information-reading apparatus of single-side light collecting type adopting a point detection system.
Fig. 2 is a sectional view schematically illustrating an example of the radiation image storage panel of the invention.

### DETAILED DESCRIPTION OF THE INVENTION

The radiation image storage panel of the invention preferably comprises at least a support, a stimulable phosphor layer and a protective film arranged in order.

The powdery stimulable cerium activated lutetium silicate phosphor of the invention can be prepared, for example, in the following manner.

Lutetium oxide (Lu₂O₃) , silicon dioxide (SiO₂) and cerium oxide (CeO₂) are used as starting materials of the phosphor. These materials are stoichiometrically weighed and mixed in a mortar. If the desired phosphor contains elements of yttrium, gadolinium, and/or lanthanum, a small amount of yttrium oxide, gadolinium oxide, and/or lanthanum oxide can be added. One or more of these oxides can be replaced with one or more halides or other compounds. Moreover, a coactivator element such as Pr, Nd, Sm, Eu, Tb, Dy, Ho, Er, Tm, Yb, Zr, Nb, Hf, Ta, or Sr can be added, for example, in the form of oxide. In the mixture, essentially no flux such as AlF₃ or MgF₂ is added.

The mixture of starting materials is then placed in a heat-resistant container such as an alumina crucible or a platinum crucible, and then fired in an electric furnace. The firing temperature is generally in the range of 1,500 to 2,000°C, preferably approx. 1,550 to 1,800°C. The firing atmosphere may be slightly reductive, neutral or slightly oxidative, but a slightly reductive atmosphere is preferred because Ce should be introduced in the form of trivalent ion. Examples of the slightly reductive atmosphere include atmospheres in the presence of hydrogen gas or powdery carbon. The period for firing normally is in the range of 1 to 100 hours, preferably in the range of 2 to 8 hours, although depending upon various conditions such as the amount of the mixture, the firing temperature and the temperature at which the fired product is taken out of the furnace.

Thus fired product is then subjected to various disintegrating treatments (such as pulverizing and sieving). In this way, the desired cerium activated lutetium silicate phosphor can be prepared.

The ratio among the components of the starting material mixture is often slightly different from that among the contents of the resultant phosphor because the composition varies through the firing procedure in the preparation process.

The crystal structure of the obtained phosphor can be assigned according to the X-ray diffraction method. The obtained cerium activated lutetium silicate phosphor gives a diffraction pattern identical to a diffraction pattern of JCPDS card No. 410239. The phosphor of the invention may have a complex structure consisting of crystalline parts and amorphous parts.

The phosphor particles have an average size of generally 0.05 to 20 µm, preferably 0.5 to 10 µm. The phosphor particle may be a single crystal, a polycrystal consisting of fine crystallites or a secondary particle of crystallite aggregate.

The radiation image storage panel of the invention has an energy-storing phosphor layer in which the stimulable powdery cerium activated lutetium silicate phosphor of the formula (I) is contained. The phosphor layer comprises a binder and the powder phosphor dispersed therein. The phosphor layer may further contain other phosphor particles or additives such as colorant. In the following description, the process for preparing the storage panel of the invention is explained in detail.

The support of the storage panel is normally a sheet or film having a thickness of 50 µm to 1 mm. Examples of resin material employable for the support include polyethylene terephthalate, polyethylene naphthalate, aramide resin and polyimide resin. The support may be transparent, or may contain light-reflecting substances (e.g., particles of alumina, titanium dioxide or barium sulfate) that reflect stimulating rays or stimulated emission. Further, it may contain voids or light-absorbing substances (e.g., carbon black) that absorb stimulating light or stimulated emission. A metal, ceramic or glass sheet can be also used as the support, if needed.

On the phosphor layer-side surface of the support, a light-reflecting layer containing light-reflecting material such as alumina or a light-absorbing layer containing light-absorbing material such as carbon black may be provided for improving the sensitivity or the image quality. On the opposite side surface, a light-shielding layer containing, for example, carbon black may be provided. Further, for enhancing adhesion between the support and the phosphor layer, an adhesive layer may be provided on the phosphor layer-side surface. For improving the sharpness of the resultant image, fine concaves and convexes may be formed on the phosphor layer-side surface of the support (or on the phosphor layer-side surface of the auxiliary layer such as the light-reflecting layer or the light-absorbing layer, if it is provided).

On the support (or on the auxiliary layer), the phosphor layer comprising the energy-storing phosphor is provided. The phosphor layer can be formed, for example, in the following manner. First, the above energy-storing phosphor particles and a binder are dispersed and dissolved in an appropriate organic solvent to prepare a coating solution. The ratio between the binder and the phosphor in the solution depends on the characteristics of the phosphor and the aimed property of the panel, but generally they are incorporated at a ratio of 1:1 to 1:100 (binder:phosphor, by weight), preferably 1:8 to 1:40 (by weight).

Examples of the binder include natural polymers such as proteins (e.g., gelatin), polysaccharides (e.g., dextran) and gum arabic; and synthetic polymers such as polyvinyl butyral, polyvinyl acetate, nitrocellulose, ethyl cellulose, vinylidene chloride-vinyl chloride copolymer, polyalkyl (meth)acrylate, vinyl chloride-vinyl acetate copolymer, polyurethane, cellulose acetate butyrate, polyvinyl alcohol, linear polyester, and thermoplastic elastomers. These may be crosslinked with a crosslinking agent.

Examples of the solvent employable in preparation of the coating solution include lower aliphatic alcohols such as methanol, ethanol, n-propanol and n-butanol; chlorinated hydrocarbons such as methylene chloride and ethylene chloride; ketones such as acetone, methyl ethyl ketone and methyl isobutyl ketone; esters of lower aliphatic alcohols with lower aliphatic acids such as methyl acetate, ethyl acetate and butyl acetate; ethers such as dioxane, ethylene glycol monoethyl ether, ethylene glycol monomethyl ether and tetrahydrofuran; and mixtures thereof.

The coating solution may contain various additives such as a dispersant to assist the phosphor particles in dispersing, a plasticizer for enhancing the bonding between the binder and the phosphor particles, an anti-yellowing agent for preventing the layer from undesirable coloring, a hardening agent, and a crosslinking agent.

The prepared coating solution is then evenly coated onto a surface of the support, and dried to form the energy-storing phosphor layer (i.e., stimulable phosphor layer). The coating procedure can be carried out with a normal means such as a doctor blade, a roll coater or a knife coater. The thickness of the phosphor layer is determined according to various conditions such as characteristics of the desired storage panel and the mixing ratio between the binder and the phosphor, but is generally in the range of 20 µm to 1 mm, preferably in the range of 50 to 500 µm.

It is not necessary to form the phosphor layer directly on the support. For example, the phosphor layer beforehand formed on another substrate (temporary support) may be peeled off and then fixed on the support with adhesive or by hot-pressing.

The energy-storing phosphor layer may be a single layer or may consist of two or more sub-layers. The sub-layers may have different composition. For example, they may differ in the phosphor (in regard to the compound or the particle size) or in the ratio between the phosphor and the binder. In other words, the sub-layers can be optimally designed so that the emission character of the phosphor layer may suit the use of the storage panel.

On the energy-storing phosphor layer, a protective film is preferably provided to ensure good handling of the storage panel in transportation and to avoid deterioration. The protective film is preferably transparent so as not. to prevent the stimulating rays from coming in or not to prevent the emission from coming out. Further, for protecting the storage panel from chemical deterioration and physical damage, the protective film is preferably chemically stable, physically strong, and of high moisture proof.

The protective film can be provided by coating the phosphor layer with a solution in which an organic polymer (e.g., cellulose derivatives, polymethyl methacrylate, fluororesins soluble in organic solvents) is dissolved in a solvent, by placing a beforehand prepared sheet for the protective film (e.g., a film of organic polymer such as polyethylene terephthalate, a transparent glass plate) on the phosphor layer with an adhesive, or by depositing vapor of inorganic compounds on the phosphor layer. various additives may be contained in the protective film. Examples of the additives include light-scattering fine particles (e.g., particles of magnesium oxide, zinc oxide, titanium dioxide and alumina), a slipping agent (e.g., powders of perfluoroolefin resin and silicone resin) and a crosslinking agent (e.g., polyisocyanate). The thickness of the protective film is generally in the range of about 0.1 to 20 µm.

For enhancing the resistance to stain, a fluororesin layer may be provided on the protective film. The fluororesin layer can be formed by coating the surface of the protective film with a solution in which a fluororesin is dissolved or dispersed in an organic solvent, and drying the applied solution. The fluororesin may be used singly, but a mixture of the fluororesin and a film-forming resin is normally employed. In the mixture, an oligomer having polysiloxane structure or perfluoroalkyl group can be further added. In the fluororesin layer, fine particle filler may be incorporated to reduce blotches caused by interference and to improve the quality of the resultant image. The thickness of the fluororesin layer is generally in the range of 0.5 to 20 µm. For forming the fluororesin layer, additives such as a crosslinking agent, a film-hardening agent and an anti-yellowing agent can be used. In particular, the crosslinking agent is advantageously employed to improve durability of the fluororesin layer.

Thus, a radiation image storage panel of the invention can be prepared. The storage panel of the invention may have known various structures. For example, in order to improve the sharpness of the resultant image, at least one of the films (layers) may be colored with a colorant which does not absorb the stimulated emission but the stimulating rays.

In the following description, the radiation image recording and reproducing method of the invention utilizing the above-described storage panel is explained with the attached drawings referred to.

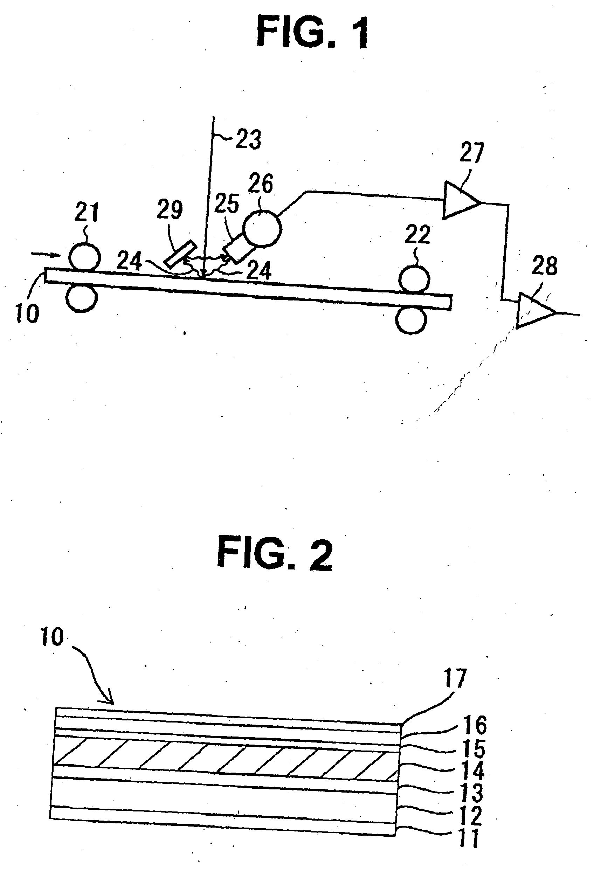

Fig. 1 is a sectional view schematically illustrating an radiation image information-reading apparatus of single-side type adopting a point detection system. Fig. 2 is a sectional view schematically illustrating an example of the radiation image storage panel of the invention. The storage panel 10 comprises a light-shielding layer 11, a support 12, a light-reflecting layer 13, an energy-storing phosphor layer 14, an adhesive layer 15, a protective film 16 and a fluororesin layer 17.

First, radiation image information (information on spatial distribution of radiation energy) is recorded on the radiation image storage panel 10 (recording procedure). This procedure is carried out, for example, by means of a radiation recording apparatus (not shown in the drawings). A sample is placed between the storage panel 10 and a radiation source such as an X-ray generator, and then exposed to radiation emitted from the source. Examples of the radiation include neutron beam and ionization radiations such as X-ray, γ-ray, α-ray, β-ray, electron beam and ultraviolet ray. According to characters of the sample and/or the radiation, the radiation passes through the object or is diffracted or scattered by the object. Since the radiation incident to the fluororesin layer 17-side surface of the panel 10 is thus affected by the sample, the spatial energy distribution thereof gives image information of the sample. A portion of the irradiated radiation is absorbed and the energy thereof is stored in the phosphor layer 14, and consequently information on the spatial energy distribution is recorded in the energy-storing phosphor layer 14 in the form of a latent image of the sample.

In the case where the sample itself emits radiation (e.g., in the case of autoradiography), the radiation source may be omitted.

Next, the information on the spatial energy distribution recorded in the storage panel 10 is read out by means of the apparatus shown in Fig. 1. The panel 10 is installed in the apparatus so that the fluororesin layer 17 may be on the reading side (upside).

In Fig. 1, the storage panel 10 is conveyed with two pairs of nip-rollers 21 and 22 in the direction indicated by the arrow. The stimulating ray 23 such as a laser beam is applied onto the fluororesin layer-side (phosphor layer-side) surface of the panel 10. From the area having been exposed to the stimulating ray 23, the phosphor layer gives off stimulated emission 24 according to the level of the stored energy (namely, according to the spatial energy distribution recorded in the form of a latent image of the sample). The stimulated emission 24 is partly reflected by the condenser mirror 29 and collected with the condenser guide 25 placed above. Another portion of the stimulated emission 24 directly comes into the condenser guide 25. The thus-condensed emission is converted into electric signals by means of the opto-electric converter (photomultiplier) 26 provided on the base of the condenser guide 25. The electric signals are amplified with the amplifier 27, and then transmitted to the signal processor 28.

In the signal processor 28, the signals are processed on the basis of operations (such as addition and subtraction) predetermined according to the use of the aimed radiation image and the characters of the used storage panel. Thus-processed signals are output as image signals.

From the image signals, a visible image is reproduced with an image reproduction apparatus (not shown in the drawings). In this way, the radiation image of the sample is reconstituted on the basis of the spatial energy distribution of radiation. The image reproduction apparatus may be a displaying device such as a CRT display, a light-scanning recorder with photosensitive film, or a thermal recorder with heat-sensitive film. Otherwise, the image signals may be temporarily recorded in an image file stored in an optical disc or a magnetic disc.

Successively after the above reading-out procedure, the storage panel 10 is still conveyed with nip-rollers 21 and 22 to an area for erasing. In the area for erasing, the panel 10 is exposed to erasing light emitted from a light source such as a sodium lamp, a fluorescent lamp or an infrared lamp, and thereby radiation energy remaining in the panel is removed so that the remaining latent image may not give undesirable effects to the next recording procedure.

The radiation may be applied to the support-side (light-shielding layer-side) surface of the panel. Further, if the panel has a structure different from that shown in Fig. 2 (if the panel comprises neither a light-shielding layer nor a light-reflecting layer but comprises a transparent support), the stimulated emission can be collected on the support side or on both sides. For example, if another condenser guide 25 and another opto-electric converter 26 are provided below the storage panel 10 in Fig. 1, the stimulated emission 23 can be collected not only on the side having been exposed to the stimulating ray 23 but also on the opposite side (double-side reading system).

In the reading-out procedure, a line detection system can be adopted. In that case, the procedure is carried out, for example, in the following manner. While the storage panel or a linear stimulating light source (e.g., LD array, LED array, fluorescent light guide) is being moved parallel to the plane of the panel, linear stimulating light is applied to the panel so that it may cross the moving direction almost perpendicularly. The stimulated emission given off from the latent image area having been exposed to the stimulating light is then sequentially and linearly detected with a line sensor, which is, for example, an array of many solid opto-electric converters. Thus, the information on the spatial distribution of radiation energy can be obtained in the form of electric signals giving a visible radiation image.

The radiation recording apparatus and the radiation image information-reading apparatus described above may be unified. If so, the procedures for recording and reading-out can be continuously performed.

In the reading-out procedure, it is also possible to make the storage panel emit light (thermoluminescence) by heating partly or all over the panel at a proper temperature (e.g, 50 to 500°C) in place of by applying the stimulating ray such as a laser beam.

### [Example 1]

### (1) Preparation of powdery Lu₂SiO₅:0.002Ce phosphor

Lutetium oxide (Lu₂O₃) , silicon dioxide (SiO₂) and cerium oxide (CeO₂) were weighed out in amounts of 4.34 g, 0.66 g and 0.004 g, respectively, and mixed in a mortar. The mixture was placed in an alumina crucible (of a small size), and a lid was put thereon. In another alumina crucible (of a large size), 10 g of powdery carbon was placed. The small alumina crucible was placed on the powdery carbon, and a still another alumina crucible (of a middle size) was put upside down in the large alumina crucible to cover the small alumina crucible. Another lid was put on the large alumina crucible, and then the large alumina crucible was placed in an electric furnace and fired at 1,600°C for 4 hours. After the firing was completed, the crucible was gradually cooled for 1 hour to 800°C and then quickly cooled to room temperature. The fired product was taken out and crushed into powder, to prepare powder of the titled phosphor. The above procedure was repeated to prepare 200 g of the desired powdery phosphor.

### (2) Preparation of phosphor sheet

| | |
|---|---|
| Lu₂SiO₅:0.002Ce phosphor particles | 200 g |
| Binder: Polyurethane elastomer | |
| Pandex T5265H (solid), Dainippon Ink | |
| & Chemicals, Inc. | 5.0 g |
| Epoxy resin | |
| Epikoat #1001 (solid), Yuka Shell Epoxy | |
| Co., Ltd | 1.4 g |
| Crosslinking agent: polyisocyanate resin | |
| Colonate HX (solid content: 100%), | |
| Nippon Polyurethane Co., Ltd. | 0.6 g |

The above materials were added in a mixed solvent of methyl ethyl ketone/toluene (7/3, by volume), and mixed and dispersed by means of a propeller mixer to prepare a coating solution having a viscosity of 30 ps at 25°C (binder/phosphor: 1/28.5, by weight). The prepared coating solution was applied onto a temporary support (polyethylene terephthalate sheet having a surface beforehand coated with a silicon releasing agent) of 180 µm thickness, and dried to form a sheet. The thus-formed sheet was then peeled from the temporary support to prepare a phosphor sheet (thickness: 300 µm).

### (3) Formation of light-reflecting layer

| | |
|---|---|
| Light-reflecting substance: Gd₂O₃ fine particles | |
| 90 wt.% of the particles | |
| have sizes of 1 to 5 µm | 35 g |
| Binder: flexible acrylic resin | |
| Cryscoat P-1018GS, 20% toluene solution | |
| Dai-nippon Ink & Chemicals, Inc. | 180 g |
| Plasticizer: phthalic acid ester | |
| #10, Daihachi Chemical Industry Co.,, Ltd. | 4 g |
| Electroconductive substance: ZnO whiskers | |
| Panatetra A-1-1, Matsushita | |
| Amtec Co., Ltd. | 12 g |
| Colorant: ultramarine | |
| SM-1, Daiichi Chemical Industry Co.,, Ltd. | 0.5 g |

The above materials were added in methyl ethyl ketone, and mixed and dissolved by means of a propeller mixer to prepare a coating solution having a viscosity of 5 ps at 20°C. Independently, a barium sulfate-containing polyethylene terephthalate sheet (support, thickness: 350 µm, Merinex #335, ICI) provided with a light-shielding layer (thickness: approx. 18 µm) comprising carbon black, silica and a binder was prepared. The coating solution was applied onto the support on the side opposite to the light-shielding layer side by means of a doctor blade, and dried to form a light-reflecting layer (thickness: 20 µm).

### (4) Production of phosphor layer

The phosphor sheet was placed on the light-reflecting layer having been provided on the support, and then continuously hot-pressed by means of a calender roll (pressure: 500 kgw/cm², temperature of the upper roll: 75°C, temperature of the lower roll: 75°C, transferring rate: 1.0 m/minute), so that the phosphor sheet might be completely fixed on the support via the light-reflecting layer. Thus, a phosphor layer (thickness: 210 µm) was provided.

### (5) Formation of fluororesin layer

| | |
|---|---|
| Fluorocarbon resin: fluoroolefin-vinyl ether copolymer | |
| Lumiflon LF-504X [30% xylene solution], | |
| Asahi Glass Co., Ltd.) | 185 g |
| Organic filler: melamine-formaldehyde | |
| Epostar S6, Nippon Catalyst Co., Ltd. | 13 g |
| Crosslinking agent: polyisocyanate | |
| Sumijule N3500 [solid content: 100%], | |
| Sumitomo Bayer Urethane, Inc. | 10 g |
| Slipping agent: silicone modified with alcohol | |
| X-22-2809 [66% xylene-containing paste], | |
| The Shin-Etsu Chemical Co., Ltd. | 1 g |
| Coupling agent: acetoalkoxyalumium diisopropylate | |
| Plane-act Al-M, Ajinomoto Co., Inc. | 0.2 g |
| Catalyst: dibutyl tin dilaurate | |
| KS1260, Kyodo Yakuhin Co., Ltd. | 0.7 mg |

The above-mentioned materials were placed in 133 g of methyl ethyl ketone, and mixed and dispersed to prepare a coating solution. The coating solution was applied on a polyethylene terephthalate (PET) film (protective film, thickness: 9 µm, Lumilar 9-F53, Toray Industries, Inc.) laminated with a heat-resistant releasable film (CT38, PANAC), and heated at 120°C for 20 minutes to harden and dry the applied solution. Thus, a fluororesin layer was provided on the protective film.

### (6) Installation of protective film

From the PET film on which the fluororesin layer was formed, the heat-resistant releasable film was peeled. On the bared surface, an unsaturated polyester resin solution (Byron 30SS, Toyobo Co., Ltd.) was coated and dried to form an adhesive layer (applied amount: 2 g/m²).

The thus-treated PET film was fixed on the phosphor layer via the adhesive layer by means of laminating rolls, to provide a protective film and a fluororesin layer. Thus, the radiation image storage panel of the invention shown in Fig. 2 was produced.

### [Example 2]

### (1) Preparation of powdery Lu_{1.8}Y_{0.2}SiO₅:0.002Ce phosphor

The procedures of Example 1 were repeated except that 4.34 g of Lu₂O₃ was replaced with a combination of 4.06 g of Lu₂O₃ and 0.26 g of Y₂O₃ and the amount of SiO₂ was changed to 0.68 g, to give the desired powdery phosphor.

### (2) Preparation of radiation image storage panel

The procedures of Example 1 were repeated using the above-obtained powdery phosphor to prepare a radiation image storage panel.

### [Example 3]

### (1) Preparation of powdery Lu_{1.8}Gd_{0.2}SiO₅:0.002Ce phosphor

The procedures of Example 1 were repeated except that 4.34 g of Lu₂O₃ was replaced with a combination of 3.94 g of Lu₂O₃ and 0.40 g of Gd₂O₃, to give the desired powdery phosphor.

### (2) Preparation of radiation image storage panel

The procedures of Example 1 were repeated using the above-obtained powdery phosphor to prepare a radiation image storage panel.

### [Example 4].

### (1) Preparation of powdery Lu_{1.8}La_{0.2}SiO₅:0.002Ce phosphor

The procedures of Example 1 were repeated except that 4.34 g of Lu₂O₃ was replaced with a combination of 3.97 g of Lu₂O₃ and 0.36 g of La₂O₃ and the amount of SiO₂ was changed to 0.67 g, to give the desired powdery phosphor.

### (2) Preparation of radiation image storage panel

The procedures of Example 1 were repeated using the above-obtained powdery phosphor to prepare a radiation image storage panel.

### [Example 5]

### (1) Preparation of powdery LU_{1.8}Y_{0.1}Gd_{0.1}SiO₅ : 0.002Ce phosphor

The procedures of Example 1 were repeated except that 4.34 g of Lu₂O₃ was replaced with a combination of 4.00 g of Lu₂O₃ , 0.13 g of Y₂O₃, and 0.20 g of Gd₂O₃ and the amount of SiO₂ was changed to 0.67 g, to give the desired powdery phosphor.

### (2) Preparation of radiation image storage panel

The procedures of Example 1 were repeated using the above-obtained powdery phosphor to prepare a radiation image storage panel.

### [Comparison Example 1]

### (1) Preparation of powdery Lu_{1.2}Y_{0.8}SiO₅ :0.002Ce phosphor

The procedures of Example 1 were repeated except that 4.34 g of Lu₂O₃ was replaced with a combination of 3.06 g of Lu₂O₃ and 1.16 g of Y₂O₃ and the amount of SiO₂ was changed to 0.77 g, to give the desired powdery phosphor.

### (2) Preparation of radiation image storage panel

The procedures of Example 1 were repeated using the above-obtained powdery phosphor to prepare a radiation image storage panel.

### [Comparison Example 2]

### (1) Preparation of powdery Lu_{1.2}Gd_{0.8}SiO₅:0.002Ce phosphor

The procedures of Example 1 were repeated except that 4.34 g of Lu₂O₃ was replaced with a combination of 2.69 g of Lu₂O₃ and 1.63 g of Gd₂O₃ and the amount of SiO₂ was changed to 0.68 g, to give the desired powdery phosphor.

### (2) Preparation of radiation image storage panel

The procedures of Example 1 were repeated using the above-obtained powdery phosphor to prepare a radiation image storage panel.

### [Comparison Example 3]

### (1) Preparation of powdery Lu_{1.2}La_{0.8}SiO₅:0.002Ce phosphor

The procedures of Example 1 were repeated except that 4.34 g of Lu₂O₃ was replaced with a combination of 2.78 g of Lu₂O₃ and 1.52 g of La₂O₃ and the amount of SiO₂ was changed to 0.70 g, to give the desired powdery phosphor.

### (2) Preparation of radiation image storage panel

The procedures of Example 1 were repeated using the above-obtained powdery phosphor to prepare a radiation image storage panel.

### [Evaluation]

Intensity of stimulated emission given by each above-prepared powdery phosphor was measured in the following manner to evaluate the radiation image storage panel. Each powdery phosphor was stuffed in a dimple (250 µm) of a holder for measurement, and exposed to X-rays of 40 kVp in the amount of 4.6 J/m² (200 mR). After 10 seconds, each phosphor was exposed to a He-Ne laser beam (wavelength: 633 nm) and thereby given stimulated emission was detected through an optical filter (B-410) with a photomultiplier tube. The amount of emitted light was integrated for 10 seconds since the emission began to come out, and reduced to a relative value for evaluating the intensity of stimulated emission.

The results are set forth in Table 1.

**Table 1**

| Example | Phosphor | Intensity of stimulated emission |
|---|---|---|
| Example 1 | Lu₂SiO₅:0.002Ce | 100 |
| Example 2 | Lu_{1.8}Y_{0.2}SiO₅:0.002Ce | 81 |
| Example 3 | Lu_{1.8}Gd_{0.2}SiO₅:0.002Ce | 62 |
| Example 4 | Lu_{1.8}La_{0.2}SiO₅:0.002Ce | 89 |
| Example 5 | Lu_{1.8}Y_{0.1}La_{0.1}SiO₅:0.002Ce | 92 |
| Com.Ex. 1 | Lu_{1.2}Y_{0.8}SiO₅:0.002Ce | 19 |
| Com.Ex. 2 | Lu_{1.2}Gd_{0.8}SiO₅:0.002Ce | 30 |
| Com.Ex. 3 | Lu_{1.2}La_{0.8}SiO₅:0.002Ce | 15 |

The results shown in Table 1 clearly indicate that powdery cerium activated lutetium silicate phosphors of the invention produce much stronger stimulated emission than comparative powdery cerium activated lutetium silicate phosphors containing a less amount of lutetium. It is, therefore, evident that the radiation image storage panel containing powdery cerium activated lutetium silicate phosphors of the invention and the radiation image recording and reproducing method give a radiation image of high quality with high sensitivity.

Accordingly, the radiation image recording and reproducing method of the invention gives a radiation image of high quality with high sensitivity, and is therefore advantageously applied to, for example, medical diagnosis.

## Claims

1. A stimulable powdery cerium activated lutetium silicate phosphor represented by the following formula (I) :
Lu_{w}YₓGd_{y}La_{z}SiOₚ:aCe (I)
in which w, x, y and z are numbers satisfying the conditions of 1.5≤w+x+y+z≤2.2, 0≤x, 0≤y, 0≤z and w/(w+x+y+z)> 0.8; p is a number to neutralize the compound; and a is a number satisfying the condition of 2 x 10⁻⁵<a<2 x 10⁻².

2. The stimulable powdery cerium activated lutetium silicate phosphor of claim 1, which is represented by the following formula (II):
Lu₂SiO₅:aCe (II)
in which a is a number satisfying the condition of 2 x 10⁻⁵ <a<2 x 10⁻².

3. A process for preparing a stimulable powdery cerium activated lutetium silicate phosphor represented by the following formula (I):
LU_{w}YₓGd_{y}La_{z}SiOₚ:aCe (I)
in which w, x, y and z are numbers satisfying the conditions of 1.5≤w+x+y+z≤2.2, 0≤x, 0≤y, 0≤z and w/(w+x+y+z)> 0.8; p is a number to neutralize the compound; and a is a number satisfying the condition of 2 x 10⁻⁵<a<2 x 10⁻², which comprises the steps of:
mixing a lutetium compound, a silicon compound, a cerium compound, and, if required, a yttrium compound, a gadolinium compound, and a lanthanum compound in a ratio of amounts corresponding to the formula (I) to give a mixture;
firing the resulting mixture at a temperature in the range of 1,500 to 2,000°C to give a fired product; and
disintegrating the fired product to give the powdery phosphor.

4. The process of claim 3, in which at least one of the lutetium compound, silicon compound, cerium compound, yttrium compound, gadolinium compound, and lanthanum compound is in the form of oxide.

5. The process of claim 4, in which all of the lutetium compound, silicon compound, cerium compound, yttrium compound, gadolinium compound, and lanthanum compound are in the form of oxide.

6. The process of claim 3, in which the step of firing the mixture is performed in the presence of powdery carbon.

7. A radiation image storage panel having a stimulable phosphor layer comprising a stimulable powdery phosphor and a binder, in which the stimulable powdery phosphor is a stimulable powdery cerium activated lutetium silicate phosphor represented by the following formula (I):
Lu_{w}YₓGd_{y}La_{z}SiOₚ:aCe (I)
in which w, x, y and z are numbers satisfying the conditions of 1.5≤w+x+y+z≤2.2, 0≤x, 0≤y, 0≤z and w/(w+x+y+z)> 0.8; p is a number to neutralize the compound; and a is a number satisfying the condition of 2 x 10⁻⁵<a<2 x 10⁻².

8. The radiation image storage panel of claim 7, in which the stimulable powdery cerium activated lutetium silicate phosphor is represented by the following formula (II):
Lu₂SiO₅:aCe (II)
in which a is a number satisfying the condition of 2 x 10⁻⁵ <a<2 x 10⁻².

9. A radiation image recording and reproducing method which comprises the steps of: exposing a radiation image storage panel of claim 7 to a radiation having passed through an object, having been diffracted or scattered by an object or having radiated from an object, whereby recording spatial energy distribution of the radiation in the phosphor layer of the storage panel as a latent image; exciting the storage panel with a stimulating light or by heating to cause the phosphor layer emit a light from the latent image; photoelectrically detecting and converting the emitted light into image signals; and forming an image corresponding to the spatial energy distribution of the radiation from of the image signals.
